# EUROPÄISCHE PATENTSCHRIFT

(11) **EP 0 900 694 B1**
(45) Veröffentlichungstag und Bekanntmachung des Hinweises auf die Patenterteilung: **27.08.2003**
(21) Anmeldenummer: 98116699.4
(22) Anmeldetag: 03.09.1998
(51) Int. Cl.: B60Q 1/26, F21V 8/00, B60Q 1/00, F21S 8/12

(54) **Signalleuchte für Fahrzeuge**
Signaling light for vehicle
Feu de signalisation pour véhicule

(30) Priorität: 06.09.1997 DE 19739173
(43) Veröffentlichungstag der Anmeldung: 10.03.1999
(73) Patentinhaber: Hella KG Hueck & Co., 59552 Lippstadt (DE)
(72) Erfinder: Beck, Christian, 91054 Erlangen (DE); Blanke, André, 59555 Lippstadt (DE); Cramer, Herbert, 59602 Rüthen (DE); Dünschede, Elmar, 59929 Brilon (DE); Eichorn, Karsten, Dr., 59320 Ennigerloh (DE); Hennböhle, Klaus, 33142 Büren (DE); Fischer, Günther, 59555 Lippstadt (DE); Jost, Franz-Gerhard, 59821 Arnsberg (DE); Plattfaut, Christian, 59558 Lippstadt (DE); Scholl, Bernhard, 59557 Lippstadt (DE)

(56) Entgegenhaltungen:
- EP-A- 0 780 265
- FR-A- 1 474 359
- GB-A- 2 245 697
- US-A- 2 764 673
- US-A- 4 949 226

## Beschreibung

Die Erfindung betrifft eine Signalleuchte für Fahrzeuge, insbesondere Kraftfahrzeuge, mit einem Gehäuse, in dem mindestens eine Lichtquelle angeordnet ist, mit einem Lichtleiter, in dem das Licht in einer vorgegebenen Lichtaustrittsrichtung geführt ist, der Lichtleiter als Lichtauskoppelelement ausgebildet ist und in dem Gehäuse angeordnet ist, das Lichtauskoppelelement auf einer Rückseite sich unmittelbar anschließende Reflexionsflächen aufweist zur Reflexion des Lichtes in die vorgegebene Lichtaustrittsrichtung und die Reflexionsfläche als Kerbfläche ausgebildet ist.

Es ist bereits bekannt, eine Signalleuchte als Positions- oder Standlicht in ein Scheinwerfergehäuse zu integrieren. Für die Aufnahme einer Lichtquelle der Signalleuchte ist üblicherweise eine Ausnehmung in dem Reflektor des Scheinwerfers vorgesehen. Nachteilig hieran ist jedoch, daß durch den Wegfall einer Reflektorteilfläche Einbußen bei der Lichtausbeute hinzunehmen sind.

Alternativ ist es bekannt, eine Signalleuchte für das Positions- oder Standlicht in einem separaten Gehäuse bzw. Gehäuseteil anzuordnen. Dies ist insbesondere dann erforderlich, wenn ein Scheinwerfer nach dem Projektionsverfahren mit zusätzlich einer Blende und einer Linse ausgebildet ist.

Aus dem US-Patent US 4,949,226 sowie aus der britischen Patentanmeldung GB 2 245 697 A sind Signalleuchten für Fahrzeuge, insbesondere Kraftfahrzeuge, bekannt, die ein Gehäuse aufweisen, in dem mindestens eine Lichtquelle angeordnet ist. In dem Gehäuse ist zudem ein Lichtleiter angeordnet, in dem das Licht in einer vorgeschriebenen Lichtaustrittsrichtung geführt ist.

Der Lichtleiter ist als Lichtauskoppelelement ausgebildet und weist auf seiner Rückseite sich unmittelbar anschließende Reflexionsflächen auf, die das Licht in eine vorgegebene Lichtaustrittsrichtung reflektieren. Bei der US 4,949,226 ist die Reflexionsfläche zudem vorteilhaft als Kerbfläche ausgebildet. Bei beiden Ständen der Technik erweist sich als nachteilig, dass die Lichtauskoppelelemente als plattenförmige, flächige Lichtleiter ausgebildet sind, die bis auf eine Öffnung für die Linse eines Projektionsmodul die gesamte Öffnungsfläche des Gehäuseteils abdecken und somit die Kontur der Signalleuchte bzw. des Scheinwerfers bzw. die Lichtfunktion der Signalleuchte bzw. Scheinwerfers nicht betonen, sondern in der beleuchteten Fläche verdecken.

Aus der französischen Patentschrift FR 1 474 359 ist eine Signalleuchte für Kraftfahrzeuge bekannt, die als ein langgestreckter Lichtleiter mit zum Beispiel kreisförmigem Querschnitt ausgebildet ist. Eine mögliche Kombination des Lichtleiters mit Lichtquelle in einer Signalleuchte oder einem Scheinwerfer ist nicht gezeigt.

Aus der EP 0 780 265 A2 ist eine Rückleuchte für Fahrzeuge bekannt, die einen Lichtleiter aufweist, in dem das von der Lichtquelle ausgesandte Licht in eine vorgegebene Lichtaustrittsrichtung umgelenkt wird. Nachteilig an dieser bekannten Rückleuchte ist, daß der Lichtleiter plattenförmig ausgebildet ist und damit die gesamte Öffnungsfläche eines Gehäuseteils abdeckt.

Eine Signalleuchte gemäß dem Oberbegriff von Anspruch 1 ist aus US 4,949,226 bekannt.

Aufgabe der vorliegenden Erfindung ist es, eine Signalleuchte für Fahrzeuge derart auszubilden, daß die Signalleuchte platzsparend in ein Gehäuse eines Scheinwerfers integriert werden kann, wobei eine Wechselwirkung zwischen der Lichtfunktion der Signalleuchte einerseits und der Lichtfunktion des Scheinwerfers andererseits weitgehend aufgehoben ist.

Die Aufgabe wird durch die Merkmale des Anspruchs 1 gelöst.

Der Vorteil der Erfindung besteht insbesondere darin, daß durch die randseitige Anordnung des Lichtauskoppelelementes an einem Gehäuse die Lichtfunktion des Scheinwerfers oder einer Leuchte nicht beeinträchtigt wird. Die gesamte Reflektorfläche kann für die Lichtfunktion genutzt werden. Die erfindungsgemäße Signalleuchte kann universell unabhängig von einem Scheinwerfertyp eingesetzt werden. Für einen Projektionsscheinwerfer braucht kein zusätzliches Gehäuse vorgesehen werden.

Dadurch, daß das Lichtauskoppelelement langgestreckt ausgebildet ist, tritt eine flächenmäßige Vergrößerung des Positionslichtes ein, so daß eine Erhöhung der Warnwirkung erzielt wird.

Nach einer Weiterbildung der Erfindung weist das Lichtauskoppelelement auf seiner Rückseite sich unmittelbar anschließende Reflektionsflächen auf, die eine homogene Lichtverteilung der Signalleuchte bewirken.

Nach einer Weiterbildung der Erfindung ist das Lichtauskoppelelement im Querschnitt kreisförmig ausgebildet. Auf einfache Weise kann das Lichtauskoppelelement randseitig des Scheinwerfergehäuses durch Verrastung mit demselben arretiert werden.

Nach einer weiteren Ausführungsform der Erfindung erstreckt sich das Lichtauskoppelelement ausschließlich entlang des Umfangs des Scheinwerfergehäuses, wobei ein Teilabschnitt des Umfangs zur Einkoppelung des Lichtes ausgespart ist. Hierdurch wird vorteilhaft die Kontur des Scheinwerfers zu Warnzwecken sichtbar gemacht, so daß die von der Signalleuchte ausgehende Warnfunktion mit der Scheinwerfergehäuseform korreliert.

Nach einer Weiterbildung der Erfindung ist unmittelbar an den Stirnflächen des Lichtauskoppelelements eine Lichtquelle angeordnet, so daß nur geringe Lichtverluste eintreten.

Nach einer alternativen Ausführungsform ist ein Lichtumlenkelement zur Einkopplung des Lichtes in das Lichtauskoppelelement vorgesehen, das vorderseitig eine Vertiefung aufweist und zu beiden Seiten der Vertiefung jeweils eine Lichtauskoppelfläche aufweist, die zu den Stirnseiten des Lichtauskoppelelements korrespondieren. Auf diese Weise wird im Zusammenwirken mit dem einstückigen Lichtauskoppelelement eine homogene Lichtverteilung erzielt.

Ausführungsbeispiele der Erfindung werden nachfolgend anhand der Zeichnungen näher erläutert.

Es zeigen:
- Figur: 1 eine schematische Vorderansicht eines Scheinwerfergehäuses mit einer randseitigen Signalleuchte ohne Abschlußscheibe nach einem ersten Ausführungsbeispiel,
- Figur 2: einen Querschnitt durch einen Scheinwerfer mit einer Signalleuchte nach dem ersten Ausführungsbeispiel gemäß Figur 1,
- Figur 3: eine schematische Draufsicht auf eine Lichteinkoppelstelle mit einem Lichtumlenkelement.

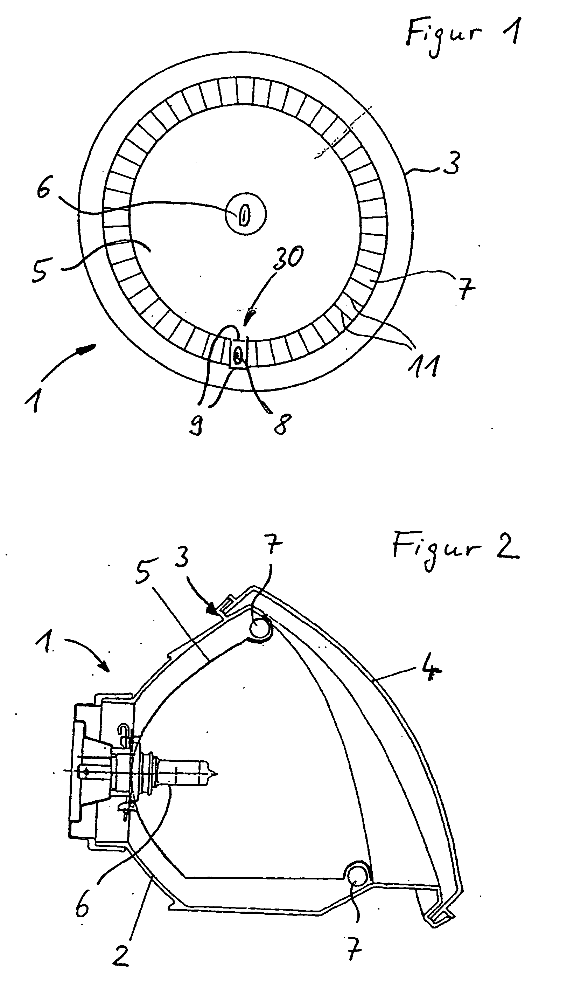

Wie aus Figur 1 und Figur 2 zu ersehen ist, besteht ein Scheinwerfer (1) für Kraftfahrzeuge aus einem topfförmigen Gehäuse (2), auf dessen vorderem kreisförmigen Rand (3) eine lichtdurchlässige Abschlußscheibe (4) aufgesetzt ist. Innerhalb des durch die Abschlußscheibe (4) und das topfförmige Gehäuse (2) gebildeten Innenraumes sind ein Reflektor (5) und eine in einer Öffnung des Reflektors (5) eingesetzte Lichtquelle (6) angeordnet. Am vorderen Rand (3) des Gehäuses (2) ist ein Lichtleiter als langgestrecktes Lichtauskoppelelement (7) zwischen dem Reflektor (5) und der Abschlußscheibe (4) angeordnet. Das Lichtauskoppelelement (7) erstreckt sich kreisringförmig entlang des Randes (3), wobei es an einem Ringabschnitt eine Aussparung aufweist für die Einkopplung des Lichtes in das Lichtauskoppelelement (7).

Nach einem ersten Ausführungsbeispiel gemäß Figur 1 ist an einer Einkoppelstelle (30) eine zweite Lichtquelle (8) für ein Positionslicht angeordnet, mit zwei parallelen in radialer Richtung verschobenen Blenden (9), die zu der Dicke des Lichtauskoppelelements (7) korrespondieren. Die Blenden (9) verhindern ein Entweichen des Lichtes in radialer Richtung. Das von der Lichtquelle (8) ausgesandte Licht wird an einer jeweils zu beiden Seiten der Lichtquelle (8) beabstandete Stirnfläche (10) des Lichtauskoppelelements (7) in dasselbe eingekoppelt.

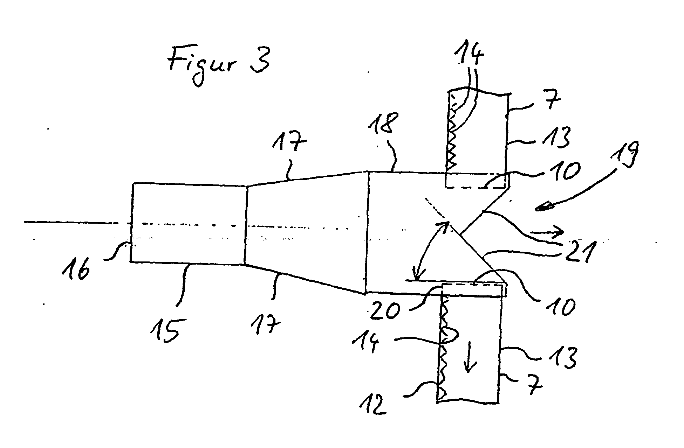

Das Lichtauskoppelelement (7) weist, wie aus Figur 3 ersichtlich ist, regelmäßig angeordnete, vorzugsweise unmittelbar ineinander anschließende Reflektionsflächen (11) an einer Rückseite (12) desselben auf, die eine teilweise Totalreflektion des Lichtes in Richtung einer Vorderseite (13) des Lichtauskoppelelements (7) bewirken. Die Reflektionsflächen (11) sind als Kerbflächen (14) ausgebildet, die jeweils in einem Abstand von ca. 2 mm von einer korrespondierenden benachbarten Kerbfläche (14) angeordnet ist.

Nach einem zweiten Ausführungsbeispiel gemäß Figur 3 ist statt der Lichtquelle (8) an der Lichteinkoppelstelle (30) ein Lichtumlenkelement (15) angeordnet, das das Licht von einer entfernten, nicht dargestellten Lichtquelle in die als Lichteinkoppelfläche dienenden Stirnseiten (10) des Lichtauskoppelelementes (7) umlenkt. Das Lichtumlenkelement (15) weist eine Einkoppelseite (16) auf, in der das Licht von der nicht dargestellten Lichtquelle eingespeist wird. In einer Querrichtung des Lichtumlenkelements (15), die senkrecht bezüglich der einkoppelnden Stirnseiten (10) angeordnet sind, verbreitert sich das Lichtumlenkelement (15) unter Ausbildung von Schrägflächen (17). In einem Lichtumlenkabschnitt (18) des Lichtumlenkelements (15) ist an einer Vorderseite eine Vertiefung (19) ausgebildet. Die Vertiefung (19) ist als Kerbe mit einem Öffnungswinkel von ca. 45 Grad ausgebildet. Die Tiefe der Kerbe (19) ist geringer als die Dicke des Lichtauskoppelelements (7). Die Stirnseiten (10) des Lichtauskoppelements (7) sind jeweils in Ausnehmungen (20) des Lichtumlenkelements (15) eingefaßt, so daß jeweils an Kerbflächen (21) der Vertiefung (19) reflektierte Lichtbündel direkt in das Lichtauskoppelelement (7) eingeleitet werden.

Die beschriebenen Lichtauskoppelelemente sind vorzugsweise aus einem Kunststoffmaterial, insbesondere aus PMMA oder PC hergestellt. Das Lichtauskoppelelement kann jeweils mit einem Scheinwerfer oder mit einer Fahrtrichtungsanzeigeleuchte kombiniert werden. Dabei kann es unabhängig von dieser Lichtfunktion betrieben werden. Die beschriebenen Lichtauskoppelelemente können jeweils entweder unmittelbar am Rand des jeweiligen Reflektors oder am Rand des Gehäuses angeordnet sein.

## Patentansprüche

1. Signalleuchte für Fahrzeuge, insbesondere Kraftfahrzeuge, mit einem Gehäuse (2), in dem mindestens eine Lichtquelle (6) und ein Reflektor (5) angeordnet sind, mit einem Lichtleiter (7), in dem das Licht in einer vorgegebenen Lichtaustrittsrichtung geführt ist, der Lichtleiter (7) als Lichtauskoppelelement (7) ausgebildet ist und in dem Gehäuse (2) angeordnet ist, das Lichtauskoppelelement (7) auf einer Rückseite (12) sich unmittelbar anschließende Reflexionsflächen (11) aufweist zur Reflexion des Lichtes in die vorgegebene Lichtaustrittsrichtung und die Reflexionsfläche (11) als Kerbfläche (14) ausgebildet ist, **dadurch gekennzeichnet, daß** das Lichtauskoppelelement (7) im Querschnitt kreisförmig ausgebildet ist und dass das Lichtauskoppelelement (7) als ein langgestrecktes Lichtauskoppelelement (7) ausgebildet ist, das sich zumindest bereichsweise entlang eines Randes (3) des Gehäuses (2) und/oder des Reflektors (5) erstreckt, wobei eine Lichteinkoppelstelle gebildet wird, an der jeweils zwei gegenüberliegende Stirnseiten (10) des Lichtauskoppelelements (7) zur Einspeisung des Lichtes angeordnet sind.

2. Signalleuchte nach Anspruch 1, **dadurch gekennzeichnet, dass** das Lichtauskoppelelement (7) durch Verrastung in dem Gehäuse (2) gehalten ist.

3. Signalleuchte nach einem der Ansprüche 1 bis 2, **dadurch gekennzeichnet, daß** sich das Lichtauskoppelement (7) ausschließlich entlang des Umfangs des Gehäuses (2) erstreckt.

4. Signalleuchte nach einem der Ansprüche 1 bis 3, **dadurch gekennzeichnet, daß** das Lichtauskoppelelement (7) in einer Ebene mit einer Lichtquelle (8) angeordnet ist, wobei das Licht jeweils an den Stirnseiten (10) des Lichtauskoppelelements einkoppelbar ist.

5. Signalleuchte nach einem der Ansprüche 1 bis 4, **dadurch gekennzeichnet, daß** dem Lichtauskoppelelement (7) ein Lichtumlenkelement (15) zugeordnet ist, das an einer Vorderseite eine Vertiefung (19) zur Umlenkung des von der Lichtquelle (6) ausgesandten Lichtes aufweist und daß das Lichtumlenkelement (15) zu beiden Seiten der Vertiefung (19) Ausnehmungen (20) aufweist zur Aufnahme von jeweils einer Stirnseite (10) des Lichtauskoppelelements (7).

6. Signalleuchte nach Anspruch 5, **dadurch gekennzeichnet, daß** die Vertiefung (19) als Kerbe mit Kerbflächen (21) ausgebildet ist.

7. Signalleuchte nach Anspruch 5 oder 6, **dadurch gekennzeichnet, daß** die Tiefe der Kerbe (19) geringer ist als die Dicke des Lichtauskoppelelements (7).

## Claims

1. Indicator lights for vehicles, particular motor vehicles, with a housing (2) in which at least one light source (6) and one reflector (5) are disposed, with a photoconductor (7) in which the light is guided in a set light-exit direction, the photoconductor is developed as a light uncoupling element (7) and is disposed in the housing, the light uncoupling element (7) has immediately adjoining reflecting surfaces (11), on the rear side (12), to reflect the light in the set light-exit direction and the reflecting surface (11) is developed as an indented surface (14), **characterized in that** the light uncoupling element (7) is circular in cross-sectional form and that the light uncoupling element (7) is an elongated light uncoupling element (7) that extends, at least partially, along a rim (3) of the housing (2) and/or of the reflector (5), whereby a light coupling element is formed, on which, in each case, two opposite end faces (10) of the light uncoupling element (7) are disposed for feeding in the light.

2. Indicator lights in accordance with claim 1, **characterized in that** the light uncoupling element (7) is held in the housing through a locating device.

3. Indicator lights in accordance with one of claims 1 to 2, **characterized in that** the light uncoupling element (7) extends exclusively along the periphery of the housing (2).

4. Indicator lights in accordance with one of claims 1 to 3, **characterized in that** the light uncoupling element (7) is disposed in a plane with a light source (8), whereby the light uncoupling element can be coupled in.

5. Indicator lights in accordance with one of claims 1 to 4, **characterized in that** the light uncoupling element (7) has a light guiding element (15) assigned to it that has an indentation (19) to guide the light transmitted from the light source (6) on a front side, and **in that** the light guiding element (15) has recesses (20), on both sides of the indentation (19), for taking up, in each case, an end-face (10) of the light uncoupling element (7).

6. Indicator lights in accordance with claim 5, **characterized in that** the indentation (19) is developed as a notch with notch faces (21).

7. Indicator lights in accordance with claim 5 or 6, **characterized in that** the depth of the notch (19) is less than the thickness of the light uncoupling element (7).

## Revendications

1. Feu de signalisation pour véhicules, en particulier pour véhicules automobiles, comportant un boîtier (2) dans lequel sont agencés au moins une source lumineuse (6) et un réflecteur (5), un guide de lumière (7) dans lequel la lumière est guidée dans une direction de sortie de lumière prédéterminée, dans lequel le guide de lumière (7) est réalisé sous forme d'élément de découplage de lumière (7) et est agencé dans le boîtier (2), l'élément de découplage de lumière (7) présente sur une face postérieure (12) des surfaces de réflexion (11) se rejoignant directement pour réfléchir la lumière dans la direction de sortie de lumière prédéterminée, et la surface de réflexion (11) est réalisée sous forme de surface d'encoche (14), **caractérisé en ce que** l'élément de découplage de lumière (7) est réalisé circulaire en section transversale et **en ce que** l'élément de découplage de lumière (7) est réalisé sous forme d'élément de découplage de lumière (7) allongé qui s'étend au moins par portions le long d'un bord (3) du boîtier (2) et/ou du réflecteur (5), et il est formé un point de couplage de lumière au niveau duquel sont agencées deux faces frontales (10) respectives opposées, de l'élément de découplage de lumière (7), pour l'injection de la lumière.

2. Feu de signalisation selon la revendication 1, **caractérisé en ce que** l'élément de découplage de lumière (7) est retenu par enclenchement dans le boîtier (2).

3. Feu de signalisation selon l'une ou l'autre des revendications 1 et 2, **caractérisé en ce que** l'élément de découplage de lumière (7) s'étend exclusivement le long de la périphérie du boîtier (2).

4. Feu de signalisation selon l'une des revendications 1 à 3, **caractérisé en ce que** l'élément de découplage de lumière (7) est agencé dans un plan avec une source lumineuse (8), la lumière pouvant respectivement être couplée au niveau des faces frontales (10) de l'élément de découplage de lumière.

5. Feu de signalisation selon l'une des revendications 1 à 4, **caractérisé en ce qu'**à l'élément de découplage de lumière (7) est associé un élément de déviation de lumière (15) qui présente sur une face antérieure un renfoncement (19) pour dévier la lumière émise par la source lumineuse (6), et **en ce que** l'élément de déviation de lumière (15) présente, des deux côtés du renfoncement (19), des évidements (20) pour recevoir chacun une face frontale (10) de l'élément de découplage de lumière.

6. Feu de signalisation selon la revendication 5, **caractérisé en ce que** le renfoncement (19) est réalisé sous forme d'encoche avec des surfaces d'encoche (21).

7. Feu de signalisation selon l'une ou l'autre des revendications 5 et 6, **caractérisé en ce que** la profondeur de l'encoche (19) est plus faible que l'épaisseur de l'élément de découplage de lumière (7).
